(19) Europäisches Patentamt

European Patent Office

Office européen des brevets

(11) **EP 1 079 213 A2**

(12) **EUROPÄISCHE PATENTANMELDUNG**

(43) Veröffentlichungstag:
     28.02.2001 Patentblatt 2001/09

(51) Int. Cl.7: **G01F 1/84**

(21) Anmeldenummer: 00116741.0

(22) Anmeldetag: 03.08.2000

(84) Benannte Vertragsstaaten:
     **AT BE CH CY DE DK ES FI FR GB GR IE IT LI LU
     MC NL PT SE**
     Benannte Erstreckungsstaaten:
     **AL LT LV MK RO SI**

(30) Priorität: **20.08.1999 DE 19939157**

(71) Anmelder: **Krohne AG
     4019 Basel (CH)**

(72) Erfinder:
     • **Jukes, Edward P.
       Wellingborough NN8 1RX (GB)**
     • **Wood, Stephen J.
       Kettering NN15 0 HG (GB)**

(74) Vertreter:
     **Gesthuysen, von Rohr & Eggert
     Patentanwälte
     Postfach 10 13 54
     45013 Essen (DE)**

(54) **Verfahren zum Ansteuern eines Schwingungserzeugers für Coriolisdurchflussmesser**

(57)     Beschrieben und dargestellt sind ein Verfahren zum Ansteuern eines Schwingungserzeugers, der auf eine Coriolis-Leitung eines Coriolis-Massendurchflußmeßgeräts für strömende Medien einwirkt sowie eine Versorgungsschaltung für einen Schwingungserzeuger eines Massendurchflußmeßgeräts für strömende Medien, das nach dem Coriolis-Prinzip arbeitet.

Erfindungsgemäß ist vorgesehen, daß der Schwingungserzeuger mit einem pulsbreitenmodulierten gepulsten Sinussignal gespeist wird. Aufgrund von verminderten Wärmeverlusten in einer Verstärkerschaltung wird somit eine bessere Ausnutzung der für die Speisung eines Schwingungserzeugers zur Verfügung stehenden Energie erzielt.

Fig. 1

EP 1 079 213 A2

**Beschreibung**

Die Erfindung betrifft einerseits ein Verfahren zum Ansteuern eines Schwingungserzeugers, der auf eine Coriolis-Leitung eines Coriolis-Massendurchflußmeßgeräts für strömende Medien einwirkt, und andererseits eine Versorgungsschaltung für einen Schwingungserzeuger eines Massendurchflußmeßgeräts für strömende Medien, das nach dem Coriolis-Prinzip arbeitet.

Das Meßverfahren eines Massendurchflußmeßgeräts für strömende Medien, das nach dem Coriolis-Prinzip arbeitet, beruht darauf, daß die Coriolis-Leitung des Massendurchflußmeßgeräts mit Hilfe eines Schwingungserzeugers in Schwingung gebracht wird, wodurch das durch die Coriolis-Leitung hindurchströmende Medium Coriolis-Kräfte erfährt, deren Erfassung ein Maß für den Massendurchfluß durch die Coriolis-Leitung hindurch liefert. Der Schwingungserzeuger weist dabei typischerweise ein System aus einer Spule und einem Magneten auf, wobei entweder die Spule oder der Magnet mit der Coriolis-Leitung fest verbunden ist, so daß eine alternierende Erregung dieses Systems, also eine abwechselnde Bewegung des Magneten in die Spule hinein bzw. aus dieser heraus, zu einer Schwingungserregung der Coriolis-Leitung führt.

Die größte Effizienz bei einer solchen Schwingungserregung der Coriolis-Leitung wird unter anderem dann erzielt, wenn diese schwingungsmäßig im wesentlichen mit ihrer Eigenfrequenz erregt wird. Die Schwingungsamplitude der Coriolis-Leitung wird dabei typischerweise mit Hilfe einer analogen Verstärkerschaltung auf die im Medium zu erzielenden Coriolis-Kräfte eingeregelt. Dazu wird die aktuelle Schwingungsamplitude der Coriolis-Leitung mit Hilfe eines an der Coriolis-Leitung angebrachten Sensors erfaßt, der erfaßte Amplitudenwert wird mit einem Sollwert für den Amplitudenwert verglichen, und in Abhängigkeit von der Abweichung des erfaßten Amplitudenwertes von dem Sollwert für den Amplitudenwert wird ein sinusförmiges Erregungssignal um einen entsprechenden Betrag verstärkt und in die Spule des Schwingungserzeugers eingespeist.

Bei der Verstärkung des Erregungssignals kommt es jedoch zu nicht unbeträchtlichen Energieverlusten aufgrund von Wärmeverlusten in der Verstärkerschaltung. Dies wirkt sich insbesondere in solchen Situationen negativ aus, in denen die verfügbare elektrische Energie einen begrenzenden Faktor darstellt, wie z. B. bei einem Batteriebetrieb.

Es ist daher die Aufgabe der Erfindung, ein Verfahren zum Ansteuern eines Schwingungserzeugers, der auf eine Coriolis-Leitung eines Coriolis-Massendurchflußmeßgeräts für strömende Medien einwirkt, sowie eine Versorgungsschaltung für einen solchen Schwingungserzeuger bereitzustellen, mit dem/der eine gute Ausnutzung der für die Speisung des Schwingungserzeugers vorhandenen elektrischen Energie erreicht wird.

Die zuvor aufgezeigte und hergeleitete Aufgabe ist erfindungsgemäß durch ein Verfahren gelöst, bei dem der Schwingungserzeuger mit einem pulsbreitenmodulierten gepulsten Sinussignal gespeist wird. Erfindungsgemäß wird somit kein kontinuierliches Sinussignal zur Speisung des Schwingungserzeugers verwendet, sondern ein gepulstes Sinussignal. Dabei erfolgt die Steuerung der mit dem Signal übertragenen Energie über eine Pulsbreitenmodulation des gepulsten Sinussignals. Da mit dem gepulsten Sinussignal insgesamt im wesentlichen die gleiche Energie wie mit einem kontinuierlichen Sinussignal in den Schwingungserzeuger eingespeist werden muß, ist die Amplitude des pulsbreitenmodulierten gepulsten Sinussignals in dessen gesamten von Null verschiedenen Bereichen jeweils immer größer als die Amplitude des kontinuierlichen Sinussignals.

Auf die zuvor beschriebene Weise wird einerseits das Erregungssignal im Fall des pulsbreitenmodulierten gepulsten Sinussignals immer deutlich näher am maximal mit der Verstärkerschaltung erzielbaren Signalwert gehalten als das kontinuierliche Sinussignal. Andererseits wird die optimale Effizienz der Verstärkerschaltung nur im voll gesperrten bzw. im voll durchgeschalteten Zustand erzielt. In den Verstärkungsbereichen dazwischen kommt es jedoch zu nicht unbeträchtlichen Energieverlusten aufgrund von Wärmeverlusten in der Verstärkerschaltung. Diese Energieverluste nehmen allerdings mit steigendem Durchlaß der Verstärkerschaltung ab. Somit wird erreicht, daß die Effizienz der Signalverstärkung im Fall des pulsbreitenmodulierten gepulsten Sinussignals deutlich besser ist als im Fall des kontinuierlichen Sinussignals, da bei Verwendung des pulsbreitenmodulierten gepulsten Sinussignals in der Verstärkerschaltung geringere Wärmeverluste auftreten. In den Bereichen zwischen den Impulsen des pulsbreitenmodulierten gepulsten Sinussignals, also in den Bereichen, in denen das pulsbreitenmodulierte gepulste Sinussignal Null ist, ist die Effizienz der Verstärkung ohnehin optimal, da gar kein Strom fließt und somit auch kein Strom in Verlustwärme umgesetzt werden kann.

Eine besonders vorteilhafte Ausgestaltung erfährt das erfindungsgemäße Verfahren, indem das pulsbreitenmodulierte gepulste Sinussignal mit Hilfe eines Multiplexers erzeugt wird, mit dem ein Pulsbreitenmodulationssignal multipliziert wird mit einem ungepulsten Sinussignal, das eine konstante vorbestimmte Frequenz aufweist.

Das Tastverhältnis des Pulsbreitenmodulationssignals, also die Breite der einzelnen Impulse des Pulsbreitenmodulationssignals im Verhältnis zu deren Abstand voneinander, wird vorzugsweise mit Hilfe eines PID-Controllers (Proportional-Integral-Differential Controller) eingestellt. Dabei wird lediglich die Breite der Impulse verändert; deren Abstand voneinander bleibt konstant.

Eine besonders effektive Regelung der Pulsbreitenmodulation läßt sich dann erzielen, wenn die Einstellung des Tastverhältnisses des Pulsbreitenmodulationssignals im PID-Controller unter Berücksichtigung eines Fehlersignals eingestellt wird, das aus der Differenz zwischen der von einem Sensor gemessenen Auslenkung der Coriolis-Leitung einerseits und einem vorbestimmten Auslenkungssollwert andererseits ermittelt wird. Diese Regelung wird auf vorteilhafte Weise weiter vereinfacht, wenn die Amplitude des Pulsbreitenmodulationssignals konstant gehalten wird.

Ferner ist es vorteilhaft, wenn die Frequenz des Pulsbreitenmodulationssignals deutlich größer als die Frequenz des ungepulsten Sinussignals ist. Entspricht die Frequenz des ungepulsten Sinussignals dabei im wesentlichen der Resonanzfrequenz der Coriolis-Leitung, wird erreicht, daß im Frequenzbereich des Pulsbreitenmodulationssignals praktisch keine Schwingungen auf die Coriolis-Leitung übertragen werden, was weiteren Energieverlusten aufgrund von Störschwingungen der Coriolis-Leitung vorbeugt.

Die weiter oben aufgezeigte und hergeleitete Aufgabe ist erfindungsgemäß ferner durch eine Versorgungsschaltung gelöst, bei der der Schwingungserzeuger des Massendurchflußmeßgeräts von der Versorgungsschaltung mit einem pulsbreitenmodulierten gepulsten Sinussignal ansteuerbar ist. Dabei weist die Versorgungsschaltung vorzugsweise ausgangsseitig einen Verstärker auf, über den der Schwingungserzeuger gespeist wird.

Ferner wird die Versorgungsschaltung erfindungsgemäß vorteilhaft dadurch ausgestaltet, daß die Versorgungsschaltung einen Multiplexer aufweist, mit dem ein Pulsbreitenmodulationssignal multiplizierbar ist mit einem ungepulsten Sinussignal, das eine konstante vorbestimmte Frequenz aufweist.

Vorzugsweise ist schließlich in der Versorgungsschaltung ein Gate-Array mit einem PID-Controller vorgesehen, mit Hilfe dessen das Tastverhältnis des Pulsbreitenmodulationssignals einstellbar ist.

Im einzelnen gibt es nun eine Vielzahl von Möglichkeiten, das erfindungsgemäße Verfahren zum Ansteuern eines Schwingungserzeugers bzw. die erfindungsgemäße Versorgungsschaltung für einen Schwingungserzeuger auszugestalten und weiterzubilden. Dazu wird verwiesen einerseits auf die den unabhängigen Patentansprüchen nachgeordneten Patentansprüche und andererseits auf die Beschreibung eines bevorzugten Ausführungsbeispiels in Verbindung mit der Zeichnung. In der Zeichnung zeigt

Fig. 1     schematisch eine Versorgungsschaltung für einen Schwingungserzeuger gemäß dem Ausführungsbeispiel der Erfindung,

Fig. 2     schematisch den Aufbau des frei programmierbaren Gate-Arrays gemäß dem Ausführungsbeispiel der Erfindung,

Fig. 3     ein ungepulstes Sinussignal,

Fig. 4     ein Pulsbreitenmodulationssignal,

Fig. 5     ein mit einem Multiplexer erzeugtes pulsbreitenmoduliertes gepulstes Sinussignal und

Fig. 6     ein kontinuierliches Sinussignal und ein pulsbreitenmoduliertes gepulstes Sinussignal mit jeweils gleicher Gesamtamplitude im Vergleich.

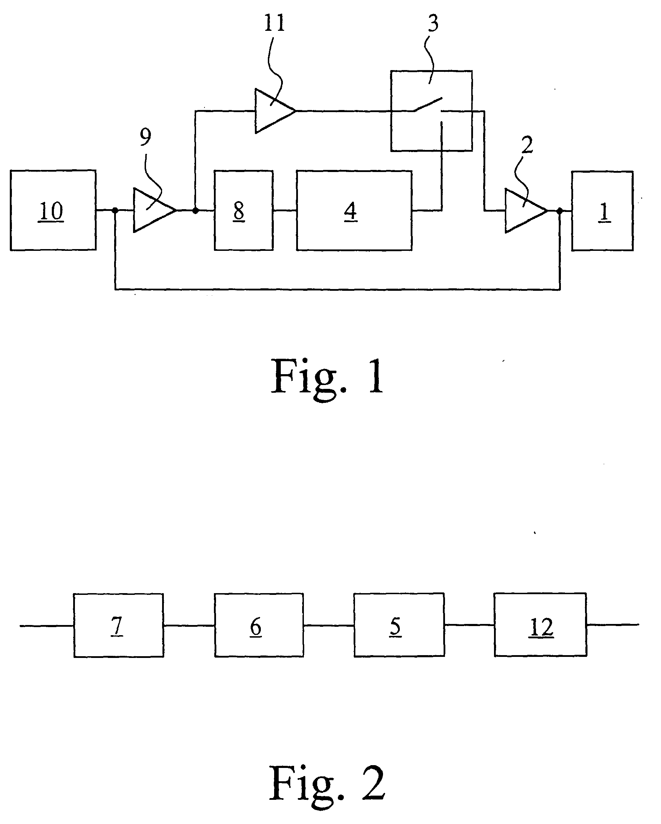

Aus Fig. 1 ist gemäß dem Ausführungsbeispiel der Erfindung schematisch eine Versorgungsschaltung für einen Schwingungserzeuger eines Coriolis-Massendurchflußmeßgeräts für strömende Medien ersichtlich. Die schwingungsmäßige Erregung der Coriolis-Leitung erfolgt mittels eines Schwingungserzeugers 1, der eine nicht gezeigte Spule und einen an der Coriolis-Leitung befestigten, ebenfalls nicht gezeigten Magneten aufweist. Gespeist wird der Schwingungserzeuger 1 über einen in der Versorgungsschaltung ausgangsseitig vorgesehenen Verstärker 2. Dem Verstärker 2 seinerseits wird ein in einem Multiplexer 3 erzeugtes Signal zugeführt.

Der Multiplexer 3 wird zum einen angesteuert von einem frei programmierbaren Gate-Array 4, dessen Aufbau schematisch aus Fig. 2 ersichtlich ist. Das frei programmierbare Gate-Array 4 weist einen PID-Controller 5, eine Vergleichseinheit 6 und einen digitalen Gleichrichter 7 auf. Über einen A/D-Wandler 8 und einen in der Versorgungsschaltung eingangsseitig vorgesehenen Verstärker 9 ist das Gate-Array 4 mit einem an der Coriolis-Leitung angebrachten Sensor 10 verbunden.

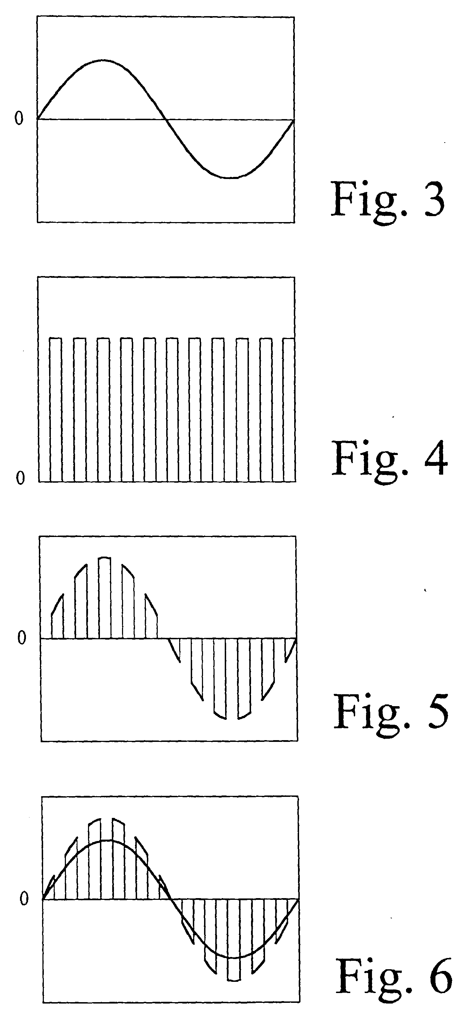

Zum anderen wird dem Multiplexer 3 über einen vorgeschalteten Verstärker 11 ein von dem an der Coriolis-Leitung angebrachten Sensor 10 erfaßtes und von dem eingangsseitigen Verstärker 9 verstärktes Signal zugeführt. Dieses Signal entspricht im wesentlichen einem kontinuierlichen, ungepulsten Sinussignal, wie aus Fig. 3 ersichtlich. Das dem Multiplexer 3 von dem frei programmierbaren Gate-Array 4 her zugeführte Signal ist ein Pulsbreitenmodulationssignal mit konstanter Frequenz, wie aus Fig. 4 ersichtlich.

Das von dem Sensor 10 erfaßte und von dem eingangsseitigen Verstärker 9 verstärkte Signal wird von dem A/D-Wandler 8 digitalisiert und dann in das frei programmierbare Gate-Array 4 eingespeist. Dort wird das Signal zuerst mit Hilfe des digitalen Gleichrichters 7 gleichgerichtet und dann in der Vergleichseinheit 6 mit einem Sollwert für die Amplitude der Schwingung der Coriolis-Leitung verglichen. Die Vergleichseinheit 6 erzeugt in Abhängigkeit von der Differenz zwischen diesem Sollwert und dem erfaßten tatsächlichen Wert der Schwingungsamplitude einen Fehlerwert F.

In dem PID-Controller 5 wird der Fehlerwert F dann gemäß der Vorschrift

$$A = S + K \cdot F + \frac{K}{T_i} \int F dt + K \cdot T_d \frac{dF}{dt}$$

weiterverarbeitet und ein Wert für die Pulsbreitenmodulation errechnet, wobei A das Ausgangssignal des PID-Controllers, S das Signal zur Aufrechterhaltung des Sollwerts, K der Verstärkungsfaktor, $T_i$ die Integrationszeit und $T_d$ die Differenzierungszeit ist.

Mit Hilfe des für die Pulsbreitenmodulation errechneten Wertes wird schließlich in einem ebenfalls im Gate-Array 4 vorgesehenen Pulsbreitenmodulationserzeuger 12 das Pulsbreitenmodulationssignal erzeugt und von da aus in den Multiplexer 3 eingespeist. Im Multiplexer 3 schließlich wird das aus Fig. 3 ersichtliche kontinuierliche Sinussignal mit dem aus Fig. 4 ersichtlichen Pulsbreitenmodulationssignal multipliziert. Als Ergebnis ergibt sich das aus Fig. 5 ersichtliche pulsbreitenmodulierte gepulste Sinussignal, das über den ausgangsseitigen Verstärker 2 zur Speisung des Schwingungserzeugers 1 verwendet wird.

Durch die beschriebene Schaltung ist ein Steuerkreis realisiert, mit Hilfe dessen die Breite der einzelnen Impulse des pulsbreitenmodulierten gepulsten Sinussignals in Abhängigkeit von der tatsächlichen Schwingungsamplitude der Coriolis-Leitung einerseits und der gewünschten Schwingungsamplitude der Coriolis-Leitung andererseits erzeugt wird.

Wie aus Fig. 6 ersichtlich, ist die Effizienz dieser Schaltung, d. h. die Effizienz beim pulsbreitenmodulierten gepulsten Sinussignal, wesentlich höher als bei der herkömmlichen Schaltung, bei der ein kontinuierliches Sinussignal zur Speisung des Schwingungserzeugers 1 verwendet wird. In allen Bereichen, in denen das pulsbreitenmodulierte gepulste Sinussignal von Null verschieden ist, liegt dessen Amplitude deutlich über der des kontinuierlichen Sinussignals. Wie oben schon angesprochen, tritt die größte Effizienz aufgrund der geringsten Wärmeverluste in der Verstärkerschaltung dann auf, wenn der Verstärker - gemäß dem Ausführungsbeispiel der Erfindung ein auf Transistoren basierender Verstärker - vollständig sperrt bzw. vollständig auf Durchlaß geschaltet ist, und die Effizienz des von Null verschiedenen Signals ist um so größer, je größer das Signal ist.

In dem aus Fig. 6 ersichtlichen Beispiel weist das pulsbreitenmodulierte gepulste Sinussignal eine Effizienz von 78 % auf, während das kontinuierliche Sinussignal lediglich eine Effizienz von 55 % aufweist. Je geringer die insgesamt erforderliche Energie zur Speisung des Schwingungserzeugers 1 ist, umso stärker verschiebt sich dieses Verhältnis sogar noch zugunsten des pulsbreitenmodulierten gepulsten Sinussignals.

**Patentansprüche**

1. Verfahren zum Ansteuern eines Schwingungserzeugers (1), der auf eine Coriolis-Leitung eines Coriolis-Massendurchflußmeßgeräts für strömende Medien einwirkt, **dadurch gekennzeichnet,** daß der Schwingungserzeuger (1) mit einem pulsbreitenmodulierten gepulsten Sinussignal gespeist wird.

2. Verfahren nach Anspruch 1, dadurch gekennzeichnet, daß das pulsbreitenmodulierte gepulste Sinussignal vor der Einspeisung in den Schwingungserzeuger (1) von einem Verstärker (2) verstärkt wird.

3. Verfahren nach einem der Ansprüche 1 oder 2, dadurch gekennzeichnet, daß das pulsbreitenmodulierte gepulste Sinussignal mit einem Multiplexer (3) erzeugt wird, mit dem ein Pulsbreitenmodulationssignal multipliziert wird mit einem ungepulsten Sinussignal , das eine konstante, vorbestimmte Frequenz aufweist.

4. Verfahren nach Anspruch 3, dadurch gekennzeichnet, daß das Pulsbreitenmodulationssignal mit Hilfe eines frei programmierbaren Gate-Arrays (4) erzeugt wird.

5. Verfahren nach Anspruch 4, dadurch gekennzeichnet, daß das Tastverhältnis des Pulsbreitenmodulationssignals im frei programmierbaren Gate-Array (4) mit Hilfe eines PID-Controllers (5) eingestellt wird.

6. Verfahren nach Anspruch 5, dadurch gekennzeichnet, daß die Einstellung des Tastverhältnisses des Pulsbreitenmodulationssignals im PID-Controller (5) unter Berücksichtigung eines Fehlersignals eingestellt wird, das aus der Differenz zwischen der von einem Sensor (10) gemessenen Auslenkung der Coriolis-Leitung und einem vorbestimmten Auslenkungssollwert ermittelt wird.

7. Verfahren nach Anspruch 6, dadurch gekennzeichnet, daß das Tastverhältnis mittels der Vorschrift

$$A = S + K \cdot F + \frac{K}{T_i} \int F dt + K \cdot T_d \frac{dF}{dt}$$

eingestellt wird, wobei A das Ausgangssignal des PID-Controllers (5), S das Signal zur Aufrechterhaltung des Sollwerts, F das Fehlersignal, K der Verstärkungsfaktor, $T_i$ die Integrationszeit und $T_d$ die Differenzierungszeit ist.

**8.** Verfahren nach einem der Ansprüche 3 bis 7, dadurch gekennzeichnet, daß die Amplitude des Pulsbreitenmodulationssignals konstant ist.

**9.** Verfahren nach einem der Ansprüche 3 bis 8, dadurch gekennzeichnet, daß die Frequenz des Pulsbreitenmodulationssignals deutlich größer als die Frequenz des ungepulsten Sinussignals ist.

**10.** Verfahren nach einem der Ansprüche 3 bis 9, dadurch gekennzeichnet, daß die Frequenz des ungepulsten Sinussignals im wesentlichen der Resonanzfrequenz der Coriolis-Leitung entspricht.

**11.** Versorgungsschaltung für einen Schwingungserzeuger eines Massendurchflußmeßgeräts für strömende Medien, das nach dem Coriolis-Prinzip arbeitet, **dadurch gekennzeichnet,** daß der Schwingungserzeuger (1) des Massendurchflußmeßgeräts von der Versorgungsschaltung mit einem pulsbreitenmodulierten gepulsten Sinussignal ansteuerbar ist.

**12.** Versorgungsschaltung nach Anspruch 11, dadurch gekennzeichnet, daß die Versorgungsschaltung ausgangsseitig einen Verstärker (2) aufweist und der Schwingungserzeuger (1) über den Verstärker (2) gespeist wird.

**13.** Versorgungsschaltung nach Anspruch 11 oder 12, dadurch gekennzeichnet, daß die Versorgungsschaltung einen Multiplexer (3) aufweist, mit dem ein Pulsbreitenmodulationssignal multiplizierbar ist mit einem ungepulsten Sinussignal, das eine konstante, vorbestimmte Frequenz aufweist.

**14.** Versorgungsschaltung nach einem der Ansprüche 11 bis 13, dadurch gekennzeichnet, daß die Versorgungsschaltung ein frei programmierbares Gate-Array (4) aufweist, mit Hilfe dessen ein Pulsbreitenmodulationssignal erzeugbar ist.

**15.** Versorgungsschaltung nach Anspruch 14, dadurch gekennzeichnet, daß das Gate-Array (4) einen PID-Controller (5) aufweist, mit Hilfe dessen das Tastverhältnis des Pulsbreitenmodulationssignals einstellbar ist.

Fig. 1

Fig. 2

Fig. 3

Fig. 4

Fig. 5

Fig. 6